(19) Europäisches Patentamt / European Patent Office / Office européen des brevets

(11) **EP 2 230 065 B1**

(12) **FASCICULE DE BREVET EUROPEEN**

(45) Date de publication et mention
de la délivrance du brevet:
**06.01.2016 Bulletin 2016/01**

(51) Int Cl.:
***B29C 51/16*** *(2006.01)*     ***B29C 51/30*** *(2006.01)*
***B29C 33/02*** *(2006.01)*     ***B29C 33/14*** *(2006.01)*
***B29C 33/38*** *(2006.01)*

(21) Numéro de dépôt: **10290140.2**

(22) Date de dépôt: **17.03.2010**

(54) **Moule de thermoformage à isolation thermique et procédé associé**

Formwerkzeug zum Warmformen mit Wärmedämmung, und entsprechendes Verfahren

Thermoforming mould with thermal insulation and associated method

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **20.03.2009 FR 0901306**

(43) Date de publication de la demande:
**22.09.2010 Bulletin 2010/38**

(73) Titulaire: **A.R.C.I.L.**
**95650 Puiseux Pontoise (FR)**

(72) Inventeur: **Le Roi, Paul**
**91130 Ris-Orangis (FR)**

(74) Mandataire: **Reboussin, Yohann Mickaël Noël et al**
**Cabinet Orès**
**36, rue de St Pétersbourg**
**75008 Paris (FR)**

(56) Documents cités:
**DE-A1-102005 030 678     FR-A- 2 340 185
FR-A- 2 528 355     GB-A- 2 238 974
US-A- 2 282 423**

**Description**

L'invention concerne le domaine des moules de thermoformage.

L'invention concerne plus précisément les moules de thermoformage utilisés dans l'industrie alimentaire pour fabriquer des pots en matière plastique et déposer un décor autour du pot.

Ces moules présentent généralement la forme d'une plaque dans laquelle sont formées des alvéoles de thermoformage des pots. Les pots sont par exemple des pots de yaourt et le décor thermocollé sur le pot est le plus souvent fait en papier thermo-adhérent.

Pour fabriquer un pot en matière plastique par thermoformage, on dispose un décor dans le moule contre une paroi périphérique de celui-ci puis on introduit du plastique, se présentant sous la forme d'une plaque préchauffée, dans le moule, lequel est ensuite plaqué contre les parois du moule par soufflage.

La température du plastique destiné à former le pot est supérieure à celle du moule. Ainsi, au contact du moule, le plastique se refroidit et se solidifie : il s'agit de l'opération de thermoformage.

Pendant le thermoformage, on met à profit la chaleur transférée depuis le plastique introduit dans le moule vers le moule pour assurer le thermocollage du décor sur le pot en plastique.

Le moule doit ainsi être suffisamment froid pour que la matière plastique plaquée par soufflage dans le moule se solidifie afin de former un pot alimentaire. Le moule doit également rester suffisamment chaud pour assurer le thermocollage du décor sur le pot.

Aussi, pour maintenir une température du moule permettant à la fois le thermoformage du pot alimentaire et le thermocollage d'un décor sur le pot, les moules actuels prévoient des canaux de circulation de fluide pour réguler la température.

En effet, si le moule est trop chaud, la formation du pot en plastique n'est pas satisfaisante. Par ailleurs, si le moule est trop froid, le thermocollage du décor peut s'avérer insuffisant, en particulier au niveau d'une zone de recouvrement du décor sur lui-même.

En effet, le décor présente une longueur supérieure à la circonférence d'une alvéole du moule, de sorte qu'une fois mis en place dans l'alvéole, le décor présente une zone de recouvrement sur lui-même.

La régulation de température pour maintenir des conditions permettant le thermoformage n'est pas très difficile à obtenir. L'objectif est en effet ici d'évacuer la chaleur apportée dans le moule par le matériau plastique.

A défaut, la chaleur s'accumulerait dans le moule au fil des opérations de thermoformage, au risque de ne plus assurer dans de bonnes conditions le thermoformage des pots.

Pour cela, les moules existants prévoient des canaux destinés à véhiculer un fluide de refroidissement.

La régulation de température obtenue avec ces canaux doit également permettre un thermocollage efficace d'un décor sur le pot alimentaire.

Cette conception permet un thermocollage du décor qui est satisfaisant sur l'essentiel du pourtour du pot.

Cependant, il n'en est pas de même au niveau de la zone de recouvrement du décor. En effet, au niveau de la zone de recouvrement, l'épaisseur du décor est doublée et on constate régulièrement des imperfections de collage entre les deux épaisseurs du décor et/ou du décor sur le pot alimentaire.

L'invention a ainsi pour objectif de proposer un moule permettant de diminuer les imperfections du collage, au niveau de la zone de recouvrement, entre les deux épaisseurs du décor et/ou entre le décor et le pot alimentaire.

Le document US-2,282,423 décrit un moule selon le préambule de la revendication 1. Le document FR-2528355 décrit un procédé de thermoformage selon le préambule de la revendication 10.

A cet effet, l'invention propose un moule de thermoformage de pots alimentaires comportant un décor, ce moule présentant la forme d'une plaque dans l'épaisseur de laquelle est formée au moins une alvéole de thermoformage d'un pot, ledit moule comprenant un élément d'effusivité inférieure à celle du moule, disposé sur au moins une partie de la paroi périphérique de l'alvéole et s'étendant selon la hauteur de cette paroi, caractérisé en ce que cet élément est plus haut que large, ladite partie étant destinée à être en contact avec une zone de recouvrement du décor.

Ce moule présente également l'une au moins des caractéristiques suivantes, prise seule ou en combinaison :

- il comprend un logement pour insérer ledit élément ;
- le logement débouche sur la surface supérieure du moule ;
- le logement s'étend sur toute la hauteur de la paroi périphérique de l'alvéole ;
- l'élément est une feuille disposée contre la paroi périphérique du moule ;
- l'élément est choisi dans un matériau parmi une céramique, un matériau plastique thermostable, un feutre, une résine fluoropolymère, une résine époxy comportant des microbilles, une résine syntactique, une résine polyaryletherketone (PEEK) ou du polyoxyméthylène ;
- l'élément est amovible ;
- il comprend plusieurs alvéoles, chaque alvéole comportant au moins un élément d'effusivité choisie ;
- il comprend des moyens pour refroidir le moule, de façon à maintenir celui-ci à une température inférieure ou égale à une température seuil $T_{seuil}$ de thermoformage du pot.

Pour atteindre cet objectif, il est également proposé un procédé de thermoformage de pots alimentaires comportant un décor, lequel comprend les étapes consistant à :

- introduire un matériau plastique préchauffé dans l'alvéole ;
- plaquer par soufflage le matériau plastique contre la paroi de l'alvéole,

**caractérisé en ce que**, préalablement à ces étapes, il comprend une étape consistant à disposer un décor préformé dans une alvéole d'un moule selon l'invention, de sorte qu'une zone de recouvrement du décor se situe au contact de l'élément.

L'invention sera mieux comprise et d'autres buts, avantages et caractéristiques de celle-ci apparaîtront plus clairement à la lecture de la description qui suit et qui est faite au regard des dessins annexés sur lesquels :

- la figure 1 représente un moule métallique classique comportant plusieurs alvéoles de moulage de pot alimentaire ;
- la figure 2 représente un moule selon l'invention, selon trois vues distinctes illustrées respectivement par les figures 2(a), 2(b) et 2(c).

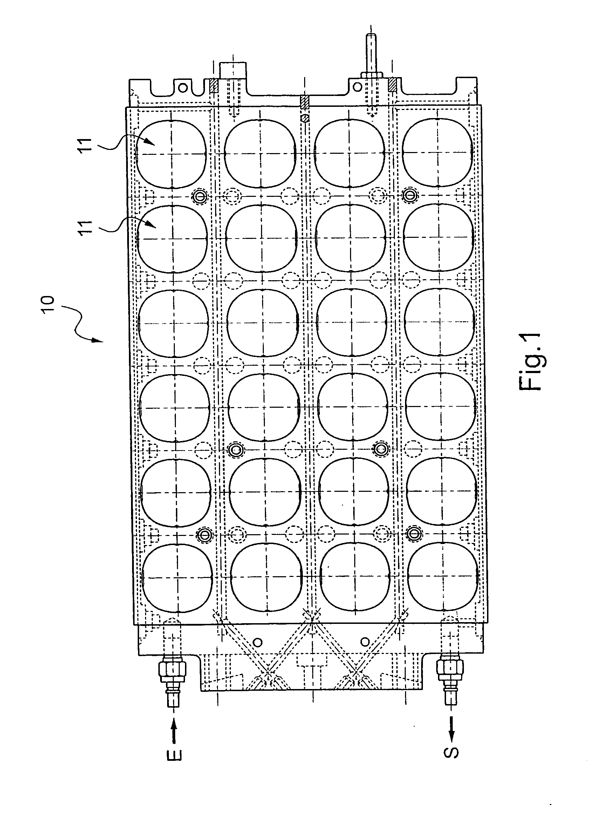

La figure 1 représente un moule 10 connu.

Ce moule 10 est réalisé avec un matériau métallique, par exemple de l'aluminium. Le moule 10 comprend plusieurs alvéoles 11 destinées à former chacune un pot alimentaire.

Il comporte également un moyen de refroidissement, représenté par son entrée E et sa sortie S. Ce moyen de refroidissement comporte des canaux disposés dans l'épaisseur du moule 10 et transportant un fluide de refroidissement pour maintenir une température constante au niveau des alvéoles.

Cette température est choisie pour être suffisamment basse afin que le refroidissement du plastique chaud introduit dans le moule permette de former le pot alimentaire, mais également suffisamment élevée pour que le décor puisse coller au pot alimentaire.

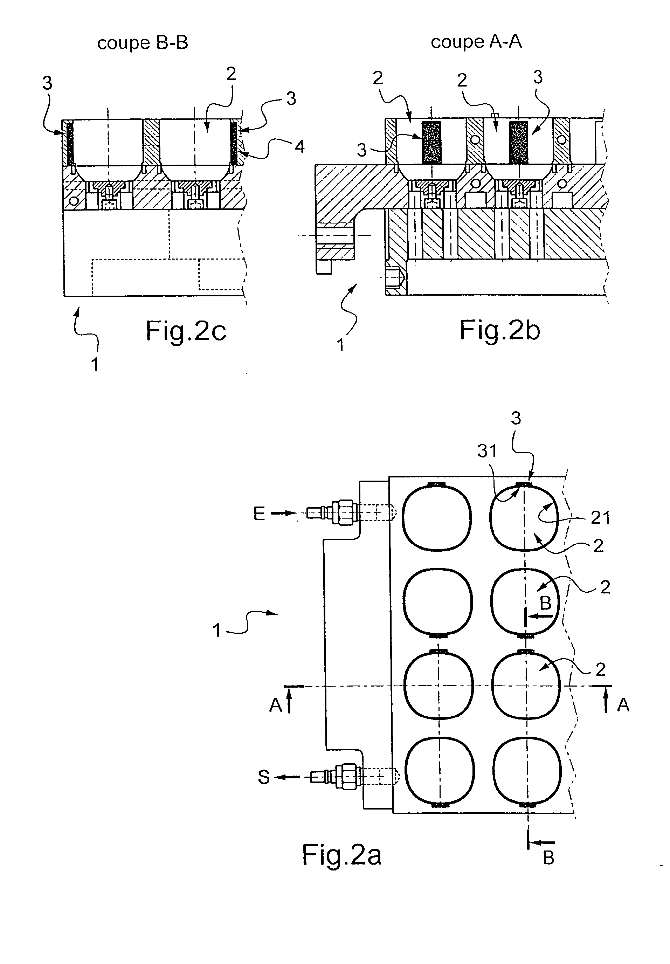

La figure 2 représente quant à elle un moule 1 conforme à l'invention, selon trois vues différentes, à savoir une vue de dessus sur la figure 2(a), une vue de coupe A-A sur la figure 2(b) prise dans le sens de la largeur du moule représenté sur la figure 2(a) et une vue de coupe partielle B-B sur la figure 2(c) prise dans le sens de la longueur du moule représenté sur la figure 2(a).

Ce moule 1 comprend plusieurs alvéoles 2 destinées à former chacune un pot alimentaire. Dans le cas présent, il est prévu deux rangées de quatre alvéoles chacune. Bien entendu, on pourrait prévoir d'autres arrangements, voire également envisager un moule n'ayant qu'une alvéole. En particulier, il pourrait être conforme dans son aspect général au moule illustré sur la figure 1.

Le moule 1 présente la forme d'une plaque dans l'épaisseur de laquelle les alvéoles 2 de thermoformage des pots sont formés.

Dans au moins une des alvéoles 2 du moule, il est également prévu un élément 3 dont l'effusivité est à la fois inférieure à l'effusivité du moule 1 et supérieure à l'effusivité du matériau destiné à former les pots. L'une 31 des faces de l'élément 3 se confond avec la paroi périphérique 21 de l'alvéole 2.

L'effusivité E d'un matériau est définie par la relation :

$$E = \sqrt{\rho c \lambda} \qquad\qquad (R1)$$

où :

$\rho$ est la masse volumique du matériau ($kg.m^{-3}$),
c est la chaleur massique du matériau ($J.kg^{-1} \cdot K^{-1}$),
$\lambda$ la conductivité thermique du matériau ($W.m^{-1}.K^{-1}$)

Lorsqu'on met subitement en contact le moule 1 d'effusivité $E_1$, à la température $T_1$, avec le matériau destiné à former un pot dans l'alvéole 2, ledit matériau présentant une température $T_2$ ($T_2 > T_1$) et une effusivité $E_2$, alors la température d'équilibre $T_{eq}$ au niveau de l'interface entre le moule 1 et le matériau plastique peut être définie approximativement par la relation :

$$T_{eq} = \frac{E_1 T_1 + E_2 T_2}{E_1 + E_2} \qquad (R2)$$

la relation (R2) étant en effet exacte pour des surfaces de contact planes, ne présentant pas de résistance de contact.

Le principe de fonctionnement aboutissant à la relation (R2) peut cependant s'appliquer au cas d'espèce.

Cette température d'équilibre $T_{eq}$ doit être inférieure à une température seuil $T_{seuil}$ pour effectuer l'opération de thermoformage du pot.

Le moule 1 est de nature métallique et présente donc une effusivité élevée. Par exemple, l'effusivité de l'acier est d'environ 14 000 (USI). En revanche, l'effusivité $E_2$ du matériau destiné à former les pots, ledit matériau étant par exemple en plastique, est très faible relativement à celui d'un métal, généralement d'environ 30 fois moins.

La température $T_1$ du moule est par exemple de l'ordre de 30°C et est inférieure à la température seuil $T_{seuil}$ permettant le thermoformage du pot alimentaire. Par ailleurs, la température $T_2$ du plastique préchauffé est comprise entre 120°C et 150°C, de préférence d'environ 135°C.

Par suite, lors de la mise au contact du matériau destiné à former le pot alimentaire avec le moule 1, la température d'équilibre $T_{eq}$ est très proche de la température $T_1$ du moule.

Le moule 1 comprend un moyen de refroidissement, représenté par son entrée E et sa sortie S, comportant des canaux disposés dans la masse du moule pour faciliter l'évacuation des calories apportées par le matériau plastique au cours des opérations successives de thermoformage, et ce, conformément aux canalisations existantes dans les moules actuels.

En variante, on peut envisager que le moule 1 ne comporte aucune canalisation de refroidissement du moule. Dans ce cas, pour éviter que la température du moule ne s'élève de manière excessive au cours des opérations successives de thermoformage, le moule 1 peut être dimensionné de façon à présenter une surface de contact importante avec le milieu ambiant. Il est encore possible de mettre en oeuvre des moyens pour créer un flux d'air forcé à la surface du moule lors de son utilisation.

La conception du moule selon l'invention est relativement simple dans la mesure où elle ne prévoit aucun réseau de canaux spécifique pour maintenir une température suffisante pour assurer le thermocollage du décor sur le pot alimentaire, en particulier au niveau de la zone de recouvrement du décor où l'épaisseur de décor est doublée.

En effet, dans le cadre de l'invention, cette fonction est réalisée par l'élément 3 dont l'effusivité $E'_1$ est inférieure à l'effusivité $E_1$ du moule 1, à savoir $E'_1 < E_1$ (R3). On pourra également prévoir que le matériau formant l'élément 3 présente également une effusivité $E'_1$ supérieure à l'effusivité du matériau plastique $E_2$.

Lorsqu'on démarre la machine pour effectuer des opérations de thermoformage/thermocollage, la température $T_1$ de la partie métallique du moule 1 et celle $T'_1$ de l'élément 3 est la même, à savoir $T_1 = T'_1$.

En raison de la relation R3, l'application de la relation R2 aboutit à la relation $T'_{eq} > T_{eq}$ ; où $T'_{eq}$ est la température d'équilibre au niveau de l'interface entre le matériau plastique et l'élément 3.

On comprend donc que le matériau plastique introduit et plaqué par soufflage dans une alvéole du moule perçoit différentes températures lorsqu'il est mis en contact avec le moule.

Plus précisément, en fonction du matériau choisi pour former l'élément 3, la température d'équilibre $T'_{eq}$ au niveau de l'interface entre le matériau plastique destiné à former le pot et l'élément 3 pourra être maintenue, pendant le thermoformage, à une valeur supérieure à une température seuil $T'_{seuil}$ à partir de laquelle le thermocollage d'un décor sur le pot sera de bonne qualité.

On pourra également prévoir que l'effusivité $E'_1$ de l'élément 3 soit supérieure à l'effusivité $E_2$ du matériau plastique formé dans le moule.

On comprend donc que le matériau plastique formé dans une alvéole du moule est en contact avec deux types de matériaux, d'une part la partie métallique du moule 1 qui peut être qualifiée de partie « conductrice » du moule et d'autre part l'élément 3 qui peut être qualifié de partie « isolante » du moule.

L'élément 3 présente une largeur minimum pour couvrir la zone de recouvrement d'un décor, les problèmes de collage du décor étant rencontrés dans l'art antérieur au niveau de la double épaisseur de décor.

Toutefois, l'élément 3 peut s'étendre au-delà de cette largeur minimum pour couvrir une plus grande partie de la paroi périphérique d'une alvéole du moule. Dans un tel cas, il faut cependant veiller à ce que le choix du matériau formant l'élément 3 permette de conserver un thermoformage efficace du pot.

L'élément 3 doit également être compatible avec les exigences et normes liées à la fabrication d'un contenant de produit alimentaire.

Des matériaux répondant aux critères mentionnés ci-dessus sont par exemple réalisés en céramique, en matériau plastique thermostable, en feutre, en résine fluoropolymère, en résine époxy chargée avec des microbilles, ces microbilles pouvant par exemple être en verre ou téflon, en résine syntactique, en résine polyaryletherketone (PEEK) ou en polyoxyméthylène (POM).

Le refroidissement du moule impliqué par la circulation du fluide dans la masse du moule peut être tel qu'il permet de maintenir la température de la partie métallique du moule 1 et de l'élément 3 à une valeur sensiblement similaire et sensiblement constante au fil des opérations successives de thermoformage/thermocollage des pots alimentaires.

On peut en outre prévoir, mais de manière facultative, que le matériau formant l'élément 3 présente une chaleur volumique pc élevée et une conductivité thermique $\lambda$ faible de sorte que la température $T'_1$ de l'élément 3 augmente au fil des opérations de thermoformage malgré le refroidissement impliqué par la circulation de fluide dans la masse du moule.

Dans un tel cas, on comprend que la température $T'_1$ de l'élément 3 s'éloigne de la température $T_1$ de la partie métallique du moule. En effet, un tel matériau présente alors une forte capacité à conserver la chaleur.

Par suite, cela favorise l'augmentation de la température d'équilibre $T'_{eq}$ à chaque opération de thermoformage, ce qui confère une marge de sécurité plus importante par rapport à la valeur $T'_{seuil}$.

L'élément 3 peut prendre plusieurs formes pour remplir sa fonction.

La présente description fournit ci-dessous quelques exemples de réalisation donnés à titre d'exemples non limitatifs.

On a par exemple représenté un mode de réalisation préférentiel de l'invention sur la figure 2, dans lequel il est prévu un insert 3 logé dans la paroi du moule.

A cet effet, le moule 1 comporte un logement 4 pour insérer ledit élément 3. Ce logement 4 débouche sur la paroi périphérique 21 de l'alvéole 2. Ainsi, l'insert présente une face 31 débouchant sur la paroi périphérique 21 de l'alvéole 2, cette face 31 pouvant ainsi se confondre avec la paroi périphérique 21 de l'alvéole 2.

Le logement 4 peut prendre différentes formes en fonction de l'application souhaitée.

Par exemple, si le décor que l'on souhaite thermocoller sur un pot présente une hauteur identique à la hauteur du pot, le logement 4 pourra s'étendre sur toute la hauteur de la paroi périphérique 21 de l'alvéole 2. Dans ce cas, le logement 4 débouche également sur la face supérieure du moule. Un tel logement 4 est représenté sur la figure 2.

En variante, si le décor que l'on souhaite thermocoller sur un pot présente une hauteur strictement inférieure à la hauteur du pot, le logement 4 pourra s'étendre sur une hauteur strictement inférieure à la hauteur de la paroi périphérique 21 de l'alvéole 2.

On comprend que l'élément 3 pourra présenter une hauteur variable en fonction de la hauteur du décor.

L'élément 3 peut couvrir une zone de recouvrement du décor sur une partie seulement de la hauteur de cette zone de recouvrement. Avantageusement, la hauteur de l'élément 3 présente une valeur minimum pour couvrir la zone de recouvrement du décor sur toute sa hauteur.

L'élément 3 peut présenter une hauteur strictement inférieure ou égale à la hauteur du logement. Avantageusement, la hauteur de l'élément 3 coïncide avec celle du logement 4, comme représenté sur la figure 2.

Dans un autre mode de réalisation, on peut envisager un élément 3 sous la forme d'une feuille disposée contre la paroi périphérique 21 du moule.

La feuille 3 présente également une largeur minimum pour couvrir la zone de recouvrement d'un décor. Toutefois, la feuille 3 peut s'étendre au-delà de cette largeur minimum pour couvrir une plus grande partie de la paroi périphérique d'une alvéole du moule. Dans un tel cas, il faut cependant veiller à ce que le choix du matériau formant la feuille 3 permette de conserver un thermoformage efficace du pot.

Par ailleurs, la feuille 3 pourra présenter une hauteur variable en fonction de la hauteur du décor. La feuille 3 peut ainsi couvrir une zone de recouvrement du décor sur une partie seulement de la hauteur de cette zone de recouvrement. Dans un cas avantageux, la hauteur de la feuille 3 présente une valeur minimum pour couvrir la zone de recouvrement du décor sur toute sa hauteur.

Selon ce mode de réalisation, il n'est pas nécessaire d'avoir un logement dans la paroi du moule.

La feuille 3 présente une épaisseur faible par rapport aux dimensions de l'alvéole pour qu'elle puisse se confondre avec la paroi périphérique 21 de l'alvéole 2 et qu'elle n'affecte pas les dimensions du pot susceptible d'être thermoformé par l'alvéole.

Quel que soit le type d'élément 3 envisagé, celui-ci pourra être amovible. Ceci présente l'avantage de pouvoir changer l'élément 3 tout en conservant le même moule 1.

Compte tenu de la forme de la zone de recouvrement du décor, on comprend que l'élément 3 s'étend, quel que soit le mode de réalisation envisagé, selon la hauteur de la paroi périphérique 21 de l'alvéole 2. On peut par exemple se référer à la figure 2 pour le premier mode de réalisation. En effet, la zone de recouvrement du décor est généralement plus haute que large.

L'invention met donc à profit les qualités « isolantes » de certains matériaux par rapport aux qualités « conductrices » du métal formant le moule 1 pour assurer à la fois un thermoformage et un thermocollage de qualité du décor, en particulier au niveau de la zone de recouvrement du décor.

Le moule s'en trouve nettement simplifié dans sa structure, sa fabrication et son utilisation.

Le moule selon l'invention permet alors de mettre en oeuvre un procédé de thermoformage de pots alimentaires comportant un décor, le procédé comprenant les étapes consistant à :

- disposer un décor préformé dans une alvéole 2 d'un moule 1 tel que défini précédemment, de sorte qu'une zone de recouvrement du décor se situe au contact de l'élément 3 ;
- introduire un matériau plastique préchauffé dans l'alvéole ;
- plaquer par soufflage le matériau plastique contre la paroi de l'alvéole.

Le préformage du décor s'effectue dans un dispositif (non représenté) qui permet d'enrouler le décor pour lui donner une forme sensiblement cylindrique, avec un diamètre légèrement inférieur à celui d'une alvéole du moule pour pouvoir l'y insérer. Comme mentionné précédemment, le décor présente une longueur supérieure à la circonférence de l'alvéole, ce qui explique pourquoi il existe une zone de recouvrement du décor sur lui-même.

**Revendications**

1. Moule (1) de thermoformage de pots alimentaires comportant un décor, ce moule présentant la forme d'une plaque dans l'épaisseur de laquelle est formée au moins une alvéole (2) de thermoformage d'un pot, ledit moule comprenant un élément (3) d'effusivité inférieure à celle du moule, disposé sur au moins une partie de la paroi périphérique (21) de l'alvéole et s'étendant selon la hauteur de cette paroi (21 **caractérisé en ce que** cet élément (3) est plus haut que large, et que ladite partie est ainsi destinée à être en contact avec une zone de recouvrement du décor.

2. Moule de thermoformage de pots alimentaires selon la revendication 1, dans lequel il est prévu un logement (4) pour insérer ledit élément.

3. Moule de thermoformage de pots alimentaires selon la revendication précédente, dans lequel le logement (4) débouche sur la surface supérieure (21) du moule.

4. Moule de thermoformage de pots alimentaires selon l'une des revendications 2 ou 3, dans lequel le logement (4) s'étend sur toute la hauteur de la paroi périphérique (21) de l'alvéole.

5. Moule de thermoformage de pots alimentaires selon la revendication 1, dans lequel l'élément (3) est une feuille disposée contre la paroi périphérique (21) du moule.

6. Moule de thermoformage de pots alimentaires selon l'une des revendications précédentes, dans lequel l'élément (3) est choisi dans un matériau parmi une céramique, un matériau plastique thermostable, un feutre, une résine fluoropolymère, une résine époxy comportant des microbilles, une résine syntactique, une résine polyaryletherketone ou du polyoxyméthylène.

7. Moule de thermoformage de pots alimentaires selon l'une des revendications précédentes, dans lequel l'élément (3) est amovible.

8. Moule de thermoformage de pots alimentaires selon l'une des revendications précédentes, dans lequel il est prévu plusieurs alvéoles (2), chaque alvéole comportant au moins un élément (3) d'effusivité choisie.

9. Moule de thermoformage de pots alimentaires selon l'une des revendications précédentes, dans lequel il est prévu des moyens pour refroidir le moule, de façon à maintenir celui-ci à une température inférieure ou égale à une température seuil ($T_{seuil}$) de thermoformage du pot.

10. Procédé de thermoformage de pots alimentaires comportant un décor, lequel comprend les étapes consistant à :

   - introduire un matériau plastique préchauffé dans l'alvéole ;
   - plaquer par soufflage le matériau plastique contre la paroi de l'alvéole,

   **caractérisé en ce que**, préalablement à ces étapes, il comprend une étape consistant à disposer un décor préformé dans une alvéole (2) d'un moule (1) selon l'une des revendications précédentes, de sorte qu'une zone de recouvrement du décor se situe au contact de l'élément (3).

**Patentansprüche**

1. Formwerkzeug (1) zum Warmformen von Lebensmittelbehältern, die einen Dekor aufweisen, wobei dieses Formwerkzeug die Form einer Platte hat, in deren Dicke mindestens eine Vertiefung (2) zum Warmformen eines Behälters ausgebildet ist, wobei das Formwerkzeug ein Element (3) mit einer geringeren Effusivität als die des Formwerkzeugs aufweist, das auf mindestens einem Teil der Umfangswand (21) der Vertiefung angeordnet ist und gemäß der Höhe dieser Wand (21) verläuft, **dadurch gekennzeichnet, dass** dieses Element (3) höher als breit ist und dadurch, dass der Teil auf diese Weise dazu bestimmt ist, mit einem Überlappungsbereich des Dekors in Kontakt zu sein.

2. Formwerkzeug zum Warmformen von Lebensmittelbehältern nach Anspruch 1, wobei eine Aufnahme (4) vorgesehen ist, um das Element einzufügen.

3. Formwerkzeug zum Warmformen von Lebensmittelbehältern nach dem vorhergehenden Anspruch, wobei die Aufnahme (4) auf der oberen Oberfläche (21) des Formwerkzeugs mündet.

4. Formwerkzeug zum Warmformen von Lebensmittelbehältern nach einem der Ansprüche 2 oder 3, wobei die Aufnahme (4) über die gesamte Höhe der Umfangswand (21) der Vertiefung verläuft.

5. Formwerkzeug zum Warmformen von Lebensmittelbehältern nach Anspruch 1, wobei es sich bei dem Element (3) um eine Folie handelt, die gegen die Umfangswand (21) des Formwerkzeugs angeordnet ist.

6. Formwerkzeug zum Warmformen von Lebensmittelbehältern nach einem der vorhergehenden Ansprüche, wobei das Element (3) aus einem Material aus Keramik, einem hitzebeständigen Kunststoffmaterial, einem Filz, einem Fluorpolymerharz, einem Epoxidharz, das Mikrokugeln aufweist, ein syntaktisches Harz, ein Polyaryletherketonharz oder Polyoxymethylen ausgewählt ist.

7. Formwerkzeug zum Warmformen von Lebensmittelbehältern nach einem der vorhergehenden Ansprüche, wobei das Element (3) abnehmbar ist.

8. Formwerkzeug zum Warmformen von Lebensmittelbehältern nach einem der vorhergehenden Ansprüche, wobei mehrere Vertiefungen (2) vorgesehen sind, wobei jede Vertiefung mindestens ein Element (3) mit ausgewählter Effusivität aufweist.

9. Formwerkzeug zum Warmformen von Lebensmittelbehältern nach einem der vorhergehenden Ansprüche, wobei Mittel vorgesehen sind, um das Formwerkzeug abzukühlen, um dieses auf einer Temperatur kleiner oder gleich einer Schwellentemperatur ($T_{Schwelle}$) zum Warmformen des Behälters zu halten.

10. Verfahren zum Warmformen von Lebensmittelbehältern, die einen Dekor aufweisen, das die folgenden Schritte aufweist:

- Einführen eines vorerhitzten Kunststoffmaterials in die Vertiefung;
- durch Einblasen das Kunststoffmaterial gegen die Wand der Vertiefung pressen,

**dadurch gekennzeichnet, dass** es, vor diesen Schritten, einen Schritt aufweist, der darin besteht, einen vorgeformten Dekor in einer Vertiefung (2) eines Formwerkzeugs (1) nach einem der vorhergehenden Ansprüche anzuordnen, so dass sich ein Überlappungsbereich des Dekors in Kontakt mit dem Element (3) befindet.

## Claims

1. Mould (1) for thermoforming food pots having a decoration, this mould being in the form of a plate in the thickness of which at least one cell (2) for thermoforming a pot is formed, said mould comprising an element (3) with an effusivity less than that of the mould, which is arranged on at least a part of the peripheral wall (21) of the cell and extends along the height of this wall (21), **characterized in that** this element (3) is higher than wide and **in that** the said part is intended to be in contact with an overlap zone of the decoration.

2. Mould for thermoforming food pots according to Claim 1, in which a compartment (4) is provided for inserting the said element.

3. Mould for thermoforming food pots according to the preceding claim, in which the compartment (4) opens onto the upper surface (10) of the mould.

4. Mould for thermoforming food pots according to one of Claims 2 and 3, in which the compartment (4) extends over the entire height of the peripheral wall (21) of the cell.

5. Mould for thermoforming food pots according to Claim 1, in which the element (3) is a sheet arranged against the peripheral wall (21) of the mould.

6. Mould for thermoforming food pots according to one of the preceding claims, in which the element (3) is selected to be made of one of the following materials:

a ceramic, a thermally stable plastic material, a felt, a fluoropolymer resin, an epoxy resin containing microbeads, a syntactic resin, a polyaryl ether ketone resin or polyoxymethylene.

7. Mould for thermoforming food pots according to one of the preceding claims, in which the element (3) is removable.

8. Mould for thermoforming food pots according to one of the preceding claims, in which a plurality of cells (2) are provided, each cell having at least one element (3) of selected effusivity.

9. Mould for thermoforming food pots according to one of the preceding claims, in which means are provided for cooling the mould, so as to keep it at a temperature lower than or equal to a threshold temperature ($T_{threshold}$) for thermoforming the pot.

10. Method of thermoforming food pots having a decoration, which comprises the steps consisting in:

- introducing a preheated plastic material into the cell;
- pressing the plastic material against the wall of the cell by blowing,

**characterized in that** before these steps it comprises a step consisting in depositing a preformed decoration in a cell (2) of a mould (1) according to one of the preceding claims, so that an overlap zone of the decoration lies in contact with the element (3).

Fig.1

coupe B-B

coupe A-A

Fig.2c

Fig.2b

Fig.2a

**EP 2 230 065 B1**

## RÉFÉRENCES CITÉES DANS LA DESCRIPTION

**Documents brevets cités dans la description**

- US 2282423 A

- FR 2528355